# FASCICULE DE BREVET EUROPEEN

(11) **EP 2 656 321 B1**
(45) Date de publication et mention de la délivrance du brevet: **07.01.2015**
(21) Numéro de dépôt: 11801791.2
(22) Date de dépôt: 29.11.2011
(51) Int. Cl.: G06F 21/31, G07C 9/00

(54) **PROCEDE POUR PERMETTRE UNE AUTHENTIFICATION OU UNE IDENTIFICATION ET SYSTEME DE VERIFICATION ASSOCIE**
VERFAHREN ZUR ERMÖGLICHUNG EINER AUTHENTIFIZIERUNG ODER EINER IDENTIFIZIERUNG UND ENTSPRECHENDES VERIFIZIERUNGSSYSTEM
PROCESS FOR ENABLING AN AUTHENTICATION OR AN IDENTIFICATION AND CORRESPONDING VERIFICATION SYSTEM.

(30) Priorité: 23.12.2010 FR 1061160
(43) Date de publication de la demande: 30.10.2013
(73) Titulaire: Morpho, 92130 Issy-les-Moulineaux (FR)
(72) Inventeur: FONDEUR, Jean-Christophe, F-75015 Paris (FR); CHABANNE, Hervé, F-75015 Paris (FR)
(74) Mandataire: Cabinet Plasseraud
(86) Numéro de dépôt international: PCT/FR2011/052816
(87) Numéro de publication internationale: WO 2012/085378

(56) Documents cités:
- WO-A1-02/37429
- WO-A2-01/77792
- US-A1- 2009 210 939
- XIAOYUAN SUO ET AL: "Graphical Passwords: A Survey", COMPUTER SECURITY APPLICATIONS CONFERENCE, 21ST ANNUAL TUCSON, AZ, USA 05-09 DEC. 2005, PISCATAWAY, NJ, USA,IEEE, 5 décembre 2005 (2005-12-05), pages 463-472, XP010869964, DOI: DOI:10.1109/CSAC.2005.27 ISBN: 978-0-7695-2461-0

## Description

La présente invention concerne l'authentification ou l'identification (c'est-à-dire une vérification) d'un individu à l'aide d'un dispositif électronique.

On notera que, dans l'ensemble du présent texte, lorsqu'on parle d'authentification ou d'identification, le "ou" est inclusif, c'est-à-dire qu'il signifie "et/ou", de sorte que la présente invention est applicable aussi bien à de l'authentification qu'à de l'identification, voire même aux deux à la fois.

L'authentification ou l'identification utilise conventionnellement un serveur stockant des données relatives à des individus ayant préalablement fait l'objet d'une phase dite d'enregistrement (ou d'inscription) auprès dudit serveur pour se voir délivrer, lors de l'authentification ou de l'identification, un droit quelconque (délivrance d'un permis de conduire, d'un titre de transport, d'une indemnisation, autorisation d'accès à un local, autorisation d'accès à un service, mise en oeuvre d'un service, paiement électronique, etc.).

Les données traditionnellement utilisées pour l'enregistrement d'individus auprès du serveur sont des données personnelles, le plus souvent alphanumériques, telles que des mots de passe, des adresses de dispositifs électroniques utilisées par les individus (e.g. adresses IP), des identités et/ou autres.

Pour être suffisamment discriminantes et ainsi permettre une authentification ou une identification avec un taux de succès acceptable, les données utilisées peuvent être relativement complexes du point de vue des individus. A titre d'exemple, plus un mot de passe contient de caractères, plus il permettra une authentification ou une identification fiable, mais plus sa mémorisation par un individu deviendra difficile.

Pour alléger la tâche des individus, il a été proposé de baser l'enregistrement et l'authentification ou l'identification sur d'autres types de données, telles que des images prédéterminées, en remplacement ou en complément des données traditionnelles.

Ainsi, lors d'un enregistrement, un individu est amené à choisir un nombre réduit d'images parmi un ensemble fini d'images prédéterminées. A titre illustratif, l'individu peut choisir un thème dans une liste (une race animalière, un type de loisir, etc.), puis sélectionner une image relative au thème choisi parmi quelques dizaines ou centaines d'images proposées. Par la suite, l'authentification ou l'identification peut consister, pour cet individu, à reproduire le même schéma et ainsi re-sélectionner la même image, de façon que cette dernière soit comparée à l'image sélectionnée lors de l'enregistrement.

En cas d'identité entre les deux images, éventuellement en complément d'une comparaison entre d'autres types de données, on peut en déduire que l'individu considéré correspond à un individu enrôlé (cas d'une identification) ou à l'individu enrôlé qu'il prétend être (cas d'une authentification).

S'il évite à l'individu d'avoir à mémoriser des données trop complexes, ce processus requiert encore un effort non négligeable de la part de l'individu pour sélectionner les images et retenir sa sélection entre l'enregistrement et chaque authentification ou identification.

En outre, l'ensemble des images prédéterminées proposées à chaque individu étant nécessairement de taille limitée, la probabilité que deux individus choisissent la ou les mêmes images peut rester élevée, limitant ainsi la fiabilité de l'authentification ou l'identification.

WO02/37429 divulgue un autre procédé d'authentification à base de mot de passe graphique.

Un but de la présente invention est d'alléger un peu plus encore la tâche des individus et, le cas échéant, de permettre une amélioration de la performance de l'authentification ou l'identification.

L'invention propose ainsi un procédé pour permettre l'authentification ou l'identification d'un individu à l'aide d'un premier dispositif électronique comportant une unité de capture d'image et une unité de transmission de données, le procédé incluant une phase d'enregistrement dudit individu auprès d'un système de vérification (i.e. d'authentification ou d'identification). La phase d'enregistrement comprend les étapes suivantes :
- capturer une première image d'au moins un objet quelconque choisi secrètement par l'individu, à l'aide de l'unité de capture d'image dudit premier dispositif électronique ;
- transmettre, à l'aide de l'unité de transmission de données dudit premier dispositif électronique, ladite première image au système de vérification.

De cette façon, la complexité est transférée de l'individu au système de vérification. En effet, l'image étant obtenue entièrement à son idée par l'individu qui choisit librement un objet ou une partie d'objet à photographier, on obtient un niveau de personnalisation tout-à-fait remarquable, susceptible de réduire l'effort de mémorisation dudit individu. A l'inverse, l'algorithme de comparaison d'images à mettre en oeuvre par le système de vérification pour l'authentification ou l'identification peut être relativement complexe par rapport à des algorithmes de comparaison de données plus traditionnelles (comme la comparaison entre deux mots de passe ou entre deux images connues à l'avance).

En outre, l'image étant obtenue par l'individu parmi un ensemble non déterminé à l'avance et potentiellement infini, on réduit le risque de voir deux individus acquérir la même image ou des images très proches, ce qui peut améliorer la performance de l'authentification ou l'identification par rapport à l'art antérieur mentionné plus haut et/ou réduire le recours à d'autres types de données complexes en complément des images.

Dans des modes de réalisation avantageux qui peuvent être combinés de toutes les manières envisageables :
- l'objet choisi par l'individu est un objet que l'individu a toujours sur lui ou à sa portée. La tâche de l'individu est alors encore simplifiée, car son authentification ou identification peut se faire à moindre effort, et éventuellement en tout lieu et/ou à tout moment ;
- la première image est transmise au système de vérification de façon sécurisée. On évite ainsi qu'un attaquant puisse s'en saisir au cours de la transmission. Sécurisée ou non, la transmission de la première image au système de vérification peut être directe ou transiter par un ou plusieurs équipements intermédiaires.
- au moins une première donnée personnelle dudit individu est transmise au système de vérification en complément de la première image. On enrichit ainsi les types de données qui vont permettre l'authentification ou l'identification.
- le procédé inclut en outre une phase d'authentification ou d'identification relativement audit individu à l'aide d'un deuxième dispositif électronique, la phase d'authentification ou d'identification comprenant les étapes suivantes mises en oeuvre au niveau du système de vérification :
   ∘ recevoir depuis le deuxième dispositif électronique une deuxième image d'au moins un objet identique ou similaire à celui de la première image ;
   ∘ comparer la deuxième image au moins avec la première image ;
   ∘ conclure que l'individu est authentifié ou identifié avec succès lorsque la comparaison de la deuxième image avec la première image révèle une concordance entre leurs objets respectifs.
- le procédé comprend en outre la réception depuis le deuxième dispositif électronique d'une deuxième donnée personnelle dudit individu correspondant à la première donnée personnelle et la comparaison de la deuxième donnée personnelle au moins avec la première donnée personnelle, et dans lequel il est conclu que l'individu est authentifié ou identifié avec succès lorsque la comparaison de la deuxième image avec la première image révèle une concordance entre leurs objets respectifs et que la comparaison de la deuxième donnée personnelle avec la première donnée personnelle révèle une concordance entre la deuxième donnée personnelle et la première donnée personnelle.
- la deuxième image a été fraîchement capturée à l'aide d'une unité de capture d'image dudit deuxième dispositif électronique, aux fins de l'authentification ou de l'identification de l'individu auprès dudit système de vérification. On évite ainsi un stockage et une réutilisation de la première image qui s'avéreraient moins sécurisés.
- le premier dispositif électronique et le deuxième dispositif électronique sont un même dispositif.
- le premier dispositif électronique et/ou le deuxième dispositif électronique appartient audit individu. On simplifie ainsi à nouveau la tâche de l'individu. Il peut par exemple s'agir d'un téléphone portable ou autre que l'individu porte couramment sur lui ou auquel il a facilement accès.
- la deuxième image est transmise au système de vérification depuis le deuxième dispositif électronique de façon sécurisée. On évite ainsi qu'un attaquant puisse s'en saisir au cours de la transmission. Sécurisée ou non, la transmission de la deuxième image au système de vérification peut être directe ou transiter par un ou plusieurs équipements intermédiaires.

L'invention propose en outre un système de vérification pour permettre l'authentification ou l'identification d'un individu selon le procédé susmentionné. Le système de vérification comprend :
- une première unité de réception pour recevoir, depuis un premier dispositif électronique, une première image capturée d'au moins un objet quelconque choisi secrètement par l'individu ;
- une deuxième unité de réception (qui est éventuellement la même que la première unité de réception) pour recevoir, depuis un deuxième dispositif électronique, une deuxième image d'au moins un objet identique ou similaire à celui de la première image ;
- un comparateur d'images pour comparer la deuxième image au moins avec la première image ;
- une unité de décision pour conclure que l'individu est authentifié ou identifié avec succès lorsque la comparaison de la deuxième image avec la première image effectuée par le comparateur révèle une concordance entre leurs objets respectifs.

Le système de vérification peut consister en un dispositif unique (e.g. un serveur), ou bien il peut être distribué entre plusieurs entités. A titre d'exemple non limitatif, les unités de réception et le comparateur d'images pourraient faire partie d'une première entité, par exemple co-localisée ou située à proximité du dispositif électronique, tandis que l'unité de décision pourrait faire appel à une deuxième entité distincte de la première, par exemple de type serveur centralisé.

L'invention propose encore un produit programme d'ordinateur comprenant des instructions de code pour mettre en oeuvre le procédé susmentionné, lorsqu'il est chargé et exécuté sur des moyens informatiques, par exemple du premier dispositif électronique et/ou du deuxième dispositif électronique et/ou du système de vérification.

D'autres particularités et avantages de la présente invention apparaîtront dans la description ci-après d'exemples de réalisation non limitatifs, en référence aux dessins annexés, dans lesquels :
- la figure 1 est un schéma montrant un exemple d'une phase d'enregistrement pouvant être mise en oeuvre selon un mode de réalisation de l'invention ;
- la figure 2 est un schéma montrant un exemple d'une phase d'authentification ou d'identification pouvant être mise en oeuvre selon un mode de réalisation de l'invention.

Un premier aspect de l'invention consiste en une phase d'enregistrement (ou d'inscription) d'un individu auprès d'un système de vérification, en vue d'une éventuelle authentification ou identification ultérieure dudit individu. Comme indiqué plus haut, cette phase d'enregistrement a pour but, pour l'individu, de se voir délivrer ultérieurement un droit quelconque (délivrance d'un permis de conduire, d'un titre de transport, d'une indemnisation, autorisation d'accès à un local, autorisation d'accès à un service, mise en oeuvre d'un service, paiement électronique, etc.).

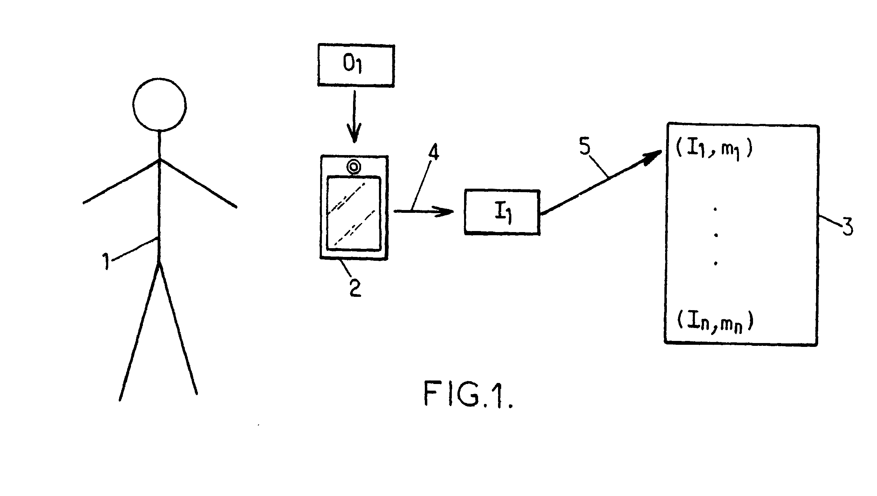

Cet aspect est illustré dans l'exemple non limitatif illustré sur la figure 1, dans lequel l'individu 1 s'enregistre auprès d'un système de vérification 3, qui peut être de tout type envisageable. A titre d'exemple non limitatif, il peut s'agir d'un serveur de forme quelconque (ordinateur avec mémoire de stockage locale, système informatique complexe coopérant avec une mémoire de stockage distante, etc.). Selon un autre exemple non limitatif, le système de vérification peut être un système distribué entre plusieurs entités, chacune étant chargée d'une ou plusieurs fonctions. Pour simplifier la lecture de la suite de la description, on considérera plus particulièrement le cas où le système de vérification 3 consiste un unique serveur (on parlera alors du serveur 3).

L'enregistrement est effectué à l'aide d'un dispositif électronique 2 qui comprend une unité de capture d'image et une unité de transmission de données. Ce dispositif électronique peut être de tout type envisageable. Il peut par exemple s'agir d'un dispositif mobile tel qu'un téléphone portable, un smartphone, un assistant personnel numérique (PDA), un ordinateur portable, une tablette électronique ou autre, muni d'un module photographique et/ou vidéo et possédant des moyens de transmission de données selon toute technologie appropriée (transmission selon un standard de communication cellulaire tel que GPRS, EDGE, UMTS, LTE ou autre, transmission selon une technologie radio comme WiFi, WiMax, Bluetooth, etc.).

En variante ou en complément, il peut par exemple s'agir d'un dispositif fixe tel qu'un ordinateur muni d'une webcam et des moyens de transmission de données selon un protocole de type IP ou autre.

En variante ou en complément, il peut s'agir d'un dispositif complexe faisant intervenir plusieurs entités séparables, comme un appareil photo ou un caméscope d'une part pour la capture d'image et une entité distincte comme un ordinateur ou autre pour la transmission de données d'autre part. Dans ce dernier cas, les différentes entités constituant le dispositif doivent être capables de coopérer de manière qu'une image capturée par une entité puisse ensuite être transmise de manière appropriée par l'autre entité.

Avantageusement, le dispositif électronique 2 est utilisé par l'individu 1 pour son propre usage, voire même il lui appartient c'est-à-dire qu'il est la propriété de l'individu 1. Il est particulièrement avantageux que l'individu 1 soit muni du dispositif électronique 2 de façon courante, comme c'est le cas par exemple d'un téléphone portable, de manière que l'individu 1 puisse l'utiliser à tout moment ou presque. Il est cependant possible que le dispositif électronique 2 ne soit pas la propriété de l'individu 1, mais soit utilisé pour plusieurs voire pour tous les individus faisant l'objet d'une phase d'enregistrement. Ainsi, il peut s'agir d'un dispositif directement associé au serveur 3.

Dans le cadre de l'enregistrement de l'individu 1, une image I₁ est capturée à l'aide de l'unité de capture d'image du dispositif électronique 2 (étape 4). Cette image I₁ représente un ou plusieurs objets O₁ quelconques choisis secrètement par l'individu 1. Dans ce contexte, le terme "objet" est à comprendre dans son acception la plus large. L'image I₁ peut ainsi être celle d'au moins un objet physique. A titre d'exemple particulièrement avantageux, l'objet O₁ représenté sur l'image I₁ peut être un élément caractéristique que l'individu 1 a toujours ou souvent sur lui ou à sa portée, comme un porte-clé fétiche, un bijou, une photographie, un tatouage, une cicatrice, ou autre.

En variante ou en complément, l'objet O₁ peut s'apparenter à autre chose qu'un objet physique, par exemple une scène caractéristique, comme un coucher de soleil, ou autre.

On notera que la notion d'image est aussi à comprendre avec une portée large. A titre d'exemple, l'image I₁ capturée peut être une image fixe ou animée (i.e. vidéo).

Plus l'image I₁ représentera d'objets O₁ (ou un objet O₁ rare), plus elle sera discriminante et donc plus l'éventuelle authentification ou l'identification ultérieure sera fiable. A titre d'exemple illustratif, si l'objet O₁ correspond à une photographie d'un objet rare, l'image I₁ capturée de cet objet sera relativement discriminante.

En tout état de cause, le ou les objets O₁ représentés sur l'image I₁ peuvent être quelconques, c'est-à-dire que c'est l'individu 1 qui les choisit librement, sans être aucunement contraint à choisir dans un ensemble prédéfini ou à partir d'un support existant. A titre d'exemple, contrairement à l'art antérieur mentionné en introduction, l'individu 1 n'a pas à choisir un objet selon des thèmes ou catégories prédéfinis. Il n'a pas non plus à sélectionner une image parmi un ensemble fini d'images représentant des objets prédéterminés. Au contraire, l'individu 1 génère sa propre image I₁, entièrement à son idée. De ce fait, l'espace possible des images est quasi infini et, en tout cas, de taille très supérieure à celle de l'art antérieur susmentionné.

En outre, grâce à ce fort pouvoir de personnalisation lors de la capture de l'image I₁, l'effort de mémorisation nécessaire à l'individu pour se souvenir de l'objet O₁ à un stade ultérieur peut être considérablement réduit, notamment par rapport à l'exercice consistant à reconnaître a posteriori une ou plusieurs images parmi quelques dizaines ou centaines d'images prédéterminées, éventuellement proches.

Un autre avantage de ce mode de fonctionnement réside dans le fait que seul l'individu 1 connaît l'objet O₁ de l'image I₁ capturée, puisque le choix de cet objet est fait secrètement par l'individu 1 (c'est-à-dire sans en informer quiconque). En particulier, le serveur 3 ne connaît pas la nature de l'objet O₁ et aucune classification de l'image I₁ n'est faite selon un type de l'objet O₁ qu'elle représente. De ce fait, l'individu 1 détient un secret qui complexifie la tâche d'un attaquant qui souhaiterait retrouver, dans le serveur 3, une donnée relative à l'individu 1. A titre d'illustration, la puissance de calcul à mettre en oeuvre par un attaquant pour comparer deux images sans en connaître le type de contenu a priori est sans commune mesure avec celle - relativement faible - requise pour comparer des chaînes d'une dizaine de caractères alphanumériques.

L'image I₁ ainsi acquise est ensuite transmise au serveur 3 à l'aide de l'unité de transmission de données du dispositif électronique 2 (étape 5). Cette transmission peut être directe ou bien transiter par un ou plusieurs dispositifs intermédiaires, comme par exemple dans le cas où la transmission se fait à travers un réseau de communication.

Le format dans lequel l'image I₁ est transmise peut être quelconque. Il peut par exemple s'agir du format directement issu de la capture d'image (e.g. JPEG, BMP, MPEG, ou autre). En variante, un autre format peut être utilisé pour la transmission, par exemple à l'issue d'une compression d'image.

Avantageusement, la transmission 5 de l'image I₁ à destination du serveur 3 est effectuée de façon sécurisée. A cet effet, toute procédure appropriée de sécurisation de la transmission peut être envisagée, comme par exemple le recours au protocole HTTPS, SSL/TLS ou autre. On évite ainsi qu'un attaquant passif surveillant la voie de transmission entre le dispositif électronique 2 et le serveur 3 puisse avoir accès en clair à l'image I₁.

A réception de l'image I₁, le serveur 3 la conserve avantageusement dans une mémoire locale ou distante à laquelle il a accès, en vue de la retrouver lors d'une éventuelle future authentification ou identification.

De façon avantageuse, une ou plusieurs données personnelles de l'individu 1 peuvent être transmises au serveur 3 en complément de l'image I₁. Ces données peuvent par exemple être transmises à l'aide de l'unité de transmission de données du dispositif électronique 2 ou par tout autre moyen approprié. Ces données personnelles peuvent comprendre toutes données susceptibles d'être utilisées dans le cadre d'une authentification ou d'une identification. A titre illustratif, elles peuvent comprendre l'un au moins parmi : un mot de passe, une adresse électronique du dispositif électronique 2, une identité, ou autre.

Dans ce cas, les différentes données relatives à l'individu 1 sont avantageusement stockées en association par ou pour le serveur 3. C'est ce qui illustré sur la figure 1, où l'image I₁ est mémorisée aux côtés d'un mot de passe m₁ de l'individu 1 (référence (I₁, m₁)).

Un avantage du mode d'enregistrement qui a été décrit jusque là réside dans la facilité, pour l'individu 1, de le révoquer. Cette révocation peut en effet consister en une simple suppression de l'image I₁ au niveau du serveur 3, par exemple suite à une demande en ce sens provenant du dispositif électronique 2 ou autre. Un remplacement de l'image I₁ par une autre image, relativement à l'individu 1, est également envisageable pour une telle révocation.

On notera également que l'utilisation de l'image I₁ garantit le respect de la vie privée de l'individu 1, puisque cette image ne fournit que peu d'information sur ledit individu. En particulier, il sera en général difficile voire impossible de retrouver l'identité de l'individu 1 à partir de la seule image I₁.

Un autre avantage encore est que le mode d'enregistrement qui a été décrit jusque là ne nécessite qu'une structure simple et un matériel limité. Comme évoqué plus haut, l'individu 1 peut en effet s'enregistrer à l'aide d'un simple téléphone portable équipé d'un module photographique par exemple. Le recours à du matériel spécialisé (carte à puce, module de traitement numérique spécifique, etc.) n'est pas nécessaire, bien qu'il ne soit pas non plus exclu. Cette faculté, pour l'individu 1 de s'enregistrer à moindres coût et effort, peut être qualifiée d'auto-enregistrement.

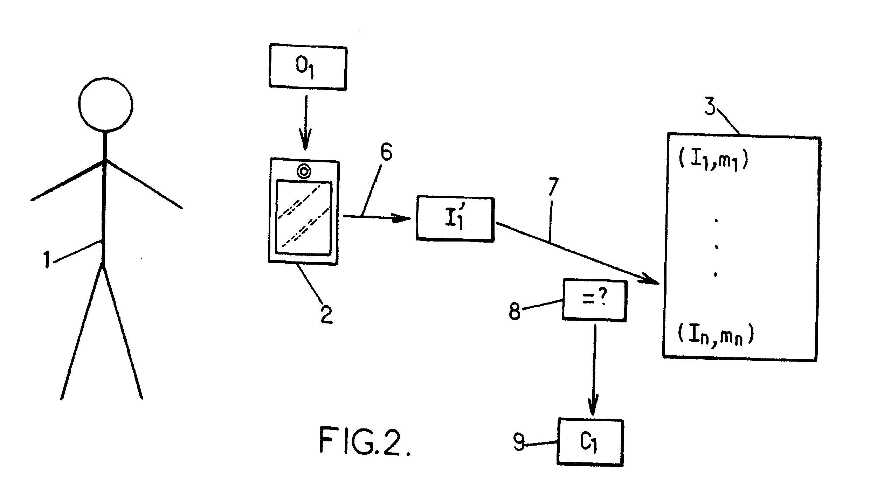

Un autre aspect de l'invention est décrit ci-après en référence à la figure 2. Il s'agit de la phase d'authentification ou d'identification d'un individu quelconque. Dans l'exemple qui suit, on s'intéresse au même individu 1 que celui qui a fait préalablement l'objet d'un enregistrement auprès du serveur 3 comme décrit plus haut.

Dans cette phase, il est fait usage d'un dispositif électronique qui peut être le même que celui utilisé pour l'enregistrement ou bien un autre dispositif électronique. Dans l'exemple non limitatif illustré sur la figure 2, le même dispositif électronique 2 est utilisé.

Une image I'₁ est obtenue par le dispositif électronique 2 (étape 6) pour être transmise au serveur 3 (étape 7). Cette image I'₁ représente un ou plusieurs objets identiques ou similaires à celui ou ceux de l'image I₁ capturée à l'occasion de l'enregistrement préalable. Dans le présent exemple, l'image I'₁ représente le même objet O₁ que celui de l'image I₁. En variante, cette image pourrait représenter un objet O'₁ similaire à l'objet O₁ de l'image I₁ variante. A titre d'exemple, si l'objet O₁ consiste en une scène donnée, par exemple un coucher de soleil, l'objet O'₁ pourrait consister en une scène comparable bien que non identique, par exemple un coucher de soleil photographié à un autre endroit et/ou un autre jour.

La façon dont l'image I'₁ est obtenue par le dispositif électronique 2 peut être diverse. Ainsi, si l'image I₁ a été mémorisée par le dispositif électronique 2 à l'occasion de la phase d'enregistrement, la même image peut être retrouvée et à nouveau transmise par le dispositif électronique 2 aux fins de l'authentification ou de l'identification. Dans ce cas, l'image I'₁ est strictement identique à l'image I₁.

En variante ou en complément, l'image I'₁ peut être fraîchement capturée à l'aide de l'unité de capture d'image du dispositif électronique 2 (ou de tout autre dispositif électronique utilisé dans cette phase) aux fins de l'authentification ou de l'identification de l'individu 1 auprès du serveur 3. On entend par « image fraîchement capturée » une image non préalablement enregistrée et transmise au système de vérification, i.e. une image acquise pour les besoins de la comparaison au moment de l'authentification ou de l'indentification de l'individu. Dans cette hypothèse, l'individu 1 pourra avantageusement s'efforcer de capturer une image « fraîche » I'₁ de l'objet O₁ aussi proche que possible que l'image de référence I₁ pour faciliter la comparaison des deux images par le serveur 3. Toutefois, les images I₁ et I'₁, bien que représentant le même objet O₁ dans le présent exemple, ne seront pas strictement identiques. Certains paramètres de capture peuvent en effet varier entre les deux images, comme le cadrage, le positionnement de l'objet, le point de vue, l'échelle de représentation, le niveau de bruit, l'éclairage et/ou autre. De telles variations sont prises en compte par l'algorithme de traitement des images.

La transmission 7 de l'image I'₁ du dispositif électronique 2 au serveur 3 peut se faire par exemple dans les mêmes conditions que pour l'image I₁, notamment en termes de format, de protocole de transmission, de mode de sécurisation (cette transmission 7 de l'image I'₁ pouvant être sécurisée) et/ou autre.

Après avoir reçu l'image I'₁, le serveur 3 la compare au moins avec l'image I₁ et éventuellement avec d'autres images reçues lors d'enregistrements préalables de divers individus (étape 8). A titre d'exemple, si l'individu 1 fait l'objet d'une procédure d'authentification, le serveur 3 est capable de retrouver l'image I₁ reçue relativement à l'individu 1 lors de son enregistrement, par exemple à l'aide d'une identité déclinée par ledit individu 1. Il peut alors réalise une comparaison entre les deux seules images I₁ et I'₁, en vue d'en tirer une conclusion sur le fait que l'individu 1 correspond ou non à l'individu enregistré qu'il prétend être. Selon un autre exemple, si l'individu 1 fait l'objet d'une procédure d'identification, le serveur 3 peut comparer l'image I'₁ à tout ou partie des images I₁,I₂,...,Iₙ reçues lors d'enregistrements préalables de divers individus, notamment l'image I₁ relative à l'individu 1, en vue d'en tirer une conclusion sur le fait que l'individu 1 correspond ou non à un individu enregistré.

La comparaison mentionnée ci-dessus entre deux images, par exemple entre les images I₁ et I'₁, consiste à vérifier si les deux images représentent ou non le ou les mêmes objets, par exemple I₁.

Pour ce faire, on peut utiliser tout algorithme connu et approprié de comparaison d'images.

A titre d'exemple non-limitatif, on peut utiliser un algorithme prévoyant la recherche sur chaque image de descripteurs locaux, comme des points caractéristiques, des informations de texture, des informations de couleur et/ou autres, puis la recherche de similarités entre les descripteurs locaux de deux images à comparer (graph matching).

Lorsqu'on utilise des points caractéristiques des images comme descripteurs locaux, par exemple selon la technique SIFT, SURF ou des points de Harris, on peut avantageusement les chercher de manière à ce qu'ils soient invariants ou du moins peu sensibles à un certain nombre de transformations d'image, comme des translations, des rotations, d'autres transformations géométriques, des différences d'éclairage, des changements d'échelle, des changements de point de vue, des variations du niveau de bruit et/ou autres. La comparaison entre les points caractéristiques de deux images peut être relativement rudimentaire ou bien plus sophistiquée, par exemple en utilisant des transformées de Hough, des recherches par voisinage, et/ou autres.

Des exemples non limitatifs d'un tel algorithme peuvent être trouvés dans les articles suivants : « Distinctive Image Features from Scale-Invariant Keypoints » de D. Lowe daté du 5 janvier 2004 (en vue d'une publication dans le "International Journal of Computer Vision" en 2004) et « Scale & Affine Invariant Interest Point Detectors » de K. Mikolajczyk et C. Schmid, International Journal of Computer Vision 60(1), 63-86, 2004.

En variante ou en complément, l'algorithme de comparaison d'images mis en oeuvre peut se baser sur une détection de contour d'objet représenté par chaque image, puis une comparaison des contours détectés à partir de leur forme (shape matching).

Un exemple non limitatif d'un tel algorithme peut être trouvé dans l'article suivant : « Shape Matching and Recognition - Using Generative Models and Informative Features » de Z. Tu et A. Yuill de 2004.

Tout autre algorithme approprié de comparaison d'images peut être mis en oeuvre aux fins de l'authentification ou de l'identification. Le site http://www.google.com/mobile/goggles/#book, par exemple, donne un exemple intéressant de moyens connus de mise en oeuvre pour la reconnaissance d'objets à partir de photos prises sur un téléphone.

Plusieurs algorithmes peuvent en outre être juxtaposés ou combinés pour améliorer la fiabilité de la comparaison.

Une conclusion C₁ d'authentification ou d'identification peut ensuite être tirée par le serveur 3 pour l'individu 1 en tenant compte du résultat de la comparaison d'images (étape 9).

Dans le cadre d'une procédure d'authentification, si la comparaison 8 entre les images I₁ et I'₁ révèle une concordance entre leurs objets respectifs, on peut par exemple conclure que l'individu 1 est l'individu enregistré qu'il prétend être. Dans le cadre d'une procédure d'identification, si la comparaison 8 entre les images I₁ et I'₁ révèle une concordance entre leurs objets respectifs, on peut par exemple conclure que l'individu 1 correspond bien à un individu enregistré.

Si, comme décrit plus haut, le serveur 3 a reçu du dispositif électronique 2 une donnée personnelle de l'individu 1, par exemple un mot de passe m₁, en complément de l'image I₁ lors de la phase d'enregistrement de l'individu 1, il peut avantageusement recevoir lors de la phase d'authentification ou d'identification, une donnée personnelle correspondante, par exemple un mot de passe m'₁, en complément de l'image I'₁. Dans ce cas, la conclusion C₁ d'authentification ou d'identification tirée par le serveur 3 pour l'individu 1 peut résulter non seulement de la comparaison des deux images I₁ et I'₁, mais aussi de la comparaison des deux données personnelles, par exemple des deux mots de passe m₁ et m'₁.

L'articulation entre les deux comparaisons peut être diverse. Par exemple, ces deux comparaisons peuvent être effectuées chacune de manière équivalente. En variante, dans le cadre d'une identification par exemple, le serveur 3 peut commencer par parcourir tout ou partie des données personnelles m₁,m₂,...,mₙ stockées pour les comparer à la donnée personnelle m'₁. Une fois qu'une sélection de candidats a été établie sur la base de cette première comparaison de données personnelles, le serveur 3 peut alors comparer l'image I'₁ aux images stockées par ou pour le serveur 3 relativement aux seuls candidats sélectionnés. On réduit ainsi la quantité de calcul nécessaire, en limitant le nombre de comparaisons d'images mises en oeuvre. D'autres articulations entre les deux types de comparaisons peuvent être envisagées, en variante ou en complément de celles qui viennent d'être décrites, comme cela apparaîtra à l'homme du métier.

On notera que, bien que la description ci-avant ait été décrite avec l'hypothèse qu'une seule image I₁ est capturée lors de la phase d'enregistrement, puis comparée à une autre image lors de la phase d'authentification ou d'identification, l'invention s'applique également au cas où plusieurs images I₁, liées ou non, seraient capturées lors de la phase d'enregistrement, puis comparées à des images correspondantes lors de la phase d'authentification ou d'identification. On accroît ainsi la discrimination et, partant, la fiabilité de l'authentification ou de l'identification.

Comme évoqué plus haut, le système de vérification 3 utilisé pourrait différer d'un unique serveur. A titre d'exemple, il pourrait être composé de plusieurs entités assurant des fonctions respectives.

Un exemple non limitatif d'un tel système de vérification distribué pourrait être agencé comme suit : une première entité du système de vérification pourrait recevoir les images I₁ et I'₁ et éventuellement assurer leur comparaison, tandis qu'une deuxième entité du système de vérification se chargerait d'une partie au moins de la vérification proprement dite, éventuellement en coopération avec la première entité. Dans un tel scénario, la première entité pourrait par exemple comprendre une carte à puce et/ou un terminal, éventuellement co-localisé avec (voire embarqué sur) un au moins des dispositifs électroniques utilisés par l'individu 1 considéré, ou situé à proximité de celui-ci, tandis que la deuxième entité pourrait par exemple consister en un serveur simple, par exemple dénué de module de traitement d'image.

Dans ce scénario, en cas de concordance entre les objets des images I₁ et I'₁, la première entité pourrait par exemple générer une clé à partir de l'image I₁ et/ou de l'image I'₁, puis cette clé pourrait être utilisée lors d'un dialogue sécurisé entre la première entité et la deuxième entité à des fins de vérification, c'est-à-dire pour authentifier et/ou identifier l'individu 1 considéré. La clé en question pourrait par exemple comprendre une valeur numérique correspondant à l'image I₁ et/ou l'image I'₁, éventuellement après application d'une fonction cryptographique, comme une fonction de hachage par exemple. La vérification pourrait alors par exemple consister en une transmission sécurisée de la clé de la première entité à la deuxième entité, puis à une comparaison par la deuxième entité de la clé ainsi reçue avec une clé préalablement obtenue relativement à l'individu 1.

D'autres mécanismes et d'autres architectures sont bien sûr également envisageables relativement au système de vérification, comme cela apparaîtra à l'homme du métier.

Tout ou partie des opérations qui ont été décrites jusque là peuvent être mises en oeuvre par un ou plusieurs programmes d'ordinateur comprenant des instructions de code appropriées. A titre d'exemple, un programme d'ordinateur peut être chargé et exécuté sur chaque dispositif électronique et/ou au niveau du système de vérification pour mettre en oeuvre les opérations respectivement à la charge de ces différentes entités.

## Revendications

1. Procédé pour permettre l'authentification ou l'identification d'un individu (1) à l'aide d'un premier dispositif électronique (2) comportant une unité de capture d'image et une unité de transmission de données, le procédé incluant une phase d'enregistrement dudit individu auprès d'un système de vérification (3), la phase d'enregistrement comprenant les étapes suivantes :
- capturer une première image (I₁) d'au moins un objet (O₁) quelconque choisi secrètement par l'individu, à l'aide de l'unité de capture d'image dudit premier dispositif électronique ;
- transmettre, à l'aide de l'unité de transmission de données dudit premier dispositif électronique, ladite première image au système de vérification ;
le procédé incluant en outre une phase d'authentification ou d'identification relativement audit individu (1) à l'aide d'un deuxième dispositif électronique (2), la phase d'authentification ou d'identification comprenant les étapes suivantes mises en oeuvre au niveau du système de vérification (3) :
- recevoir depuis le deuxième dispositif électronique une deuxième image (I'₁) d'au moins un objet (O₁) identique ou similaire à celui de la première image (I₁) ;
- comparer la deuxième image au moins avec la première image ;
- conclure que l'individu est authentifié ou identifié avec succès lorsque la comparaison de la deuxième image avec la première image révèle une concordance entre leurs objets respectifs ;
dans lequel la deuxième image est une image non préalablement enregistrée et acquise pour les besoins de la comparaison au moment de l'authentification ou de l'identification de l'individu.

2. Procédé selon l'une quelconque des revendications précédentes, dans lequel l'objet (O₁) choisi par l'individu (1) est un objet que l'individu a toujours sur lui ou à sa portée.

3. Procédé selon la revendication 1 ou 2, dans lequel la première image (I₁) est transmise au système de vérification (3) de façon sécurisée.

4. Procédé selon l'une quelconque des revendications précédentes, dans lequel au moins une première donnée personnelle (m₁) dudit individu (1) est transmise au système de vérification (3) en complément de la première image (I₁).

5. Procédé selon la revendication 4, comprenant en outre la réception depuis le deuxième dispositif électronique (2) d'une deuxième donnée personnelle dudit individu (1) correspondant à la première donnée personnelle (m₁) et la comparaison de la deuxième donnée personnelle au moins avec la première donnée personnelle, et dans lequel il est conclu que l'individu est authentifié ou identifié avec succès lorsque la comparaison de la deuxième image (I'₁) avec la première image (I₁) révèle une concordance entre leurs objets respectifs et que la comparaison de la deuxième donnée personnelle avec la première donnée personnelle révèle une concordance entre la deuxième donnée personnelle et la première donnée personnelle.

6. Procédé selon l'une quelconque des revendications précédentes, dans lequel le premier dispositif électronique (2) et le deuxième dispositif électronique (2) sont un même dispositif.

7. Procédé selon l'une quelconque des revendications précédentes, dans lequel le premier dispositif électronique (2) et/ou le deuxième dispositif électronique (2) appartient audit individu (1).

8. Procédé selon l'une quelconque des revendications précédentes, dans lequel la deuxième image (I'₁) est transmise au système de vérification (3) depuis le deuxième dispositif électronique (2) de façon sécurisée.

9. Système de vérification (3) pour permettre l'authentification ou l'identification d'un individu (1) selon l'une quelconque des revendications précédentes, le système de vérification comprenant :
- une première unité de réception pour recevoir, depuis un premier dispositif électronique (2), une première image (I₁) capturée d'au moins un objet (O₁) quelconque choisi secrètement par l'individu ;
- une deuxième unité de réception pour recevoir, depuis un deuxième dispositif électronique (2), une deuxième image (I'₁) d'au moins un objet (O₁) identique ou similaire à celui de la première image ;
- un comparateur d'images pour comparer la deuxième image au moins avec la première image ;
- une unité de décision pour conclure que l'individu est authentifié ou identifié avec succès lorsque la comparaison de la deuxième image avec la première image effectuée par le comparateur révèle une concordance entre leurs objets respectifs ;
dans lequel la deuxième image est une image non préalablement enregistrée et acquise pour les besoins de la comparaison au moment de l'authentification ou de l'identification de l'individu.

10. Système de vérification selon la revendication 9, ledit système de vérification étant distribué entre plusieurs entités.

11. Produit programme d'ordinateur comprenant des instructions de code pour mettre en oeuvre le procédé selon l'une quelconque des revendications 1 à 8, lorsqu'il est chargé et exécuté sur des moyens informatiques.

## Patentansprüche

1. Verfahren zum Ermöglichen der Authentifizierung oder Identifizierung einer Person (1) mit Hilfe einer ersten elektronischen Vorrichtung (2), die eine Bilderfassungseinheit und eine Datenübertragungseinheit aufweist, wobei das Verfahren eine Phase der Registrierung der Person in einem Überprüfungssystem (3) umfasst, wobei die Registrierungsphase die folgenden Schritte enthält:
- Erfassen eines ersten Bilds (I₁) mindestens eines von der Person geheim gewählten beliebigen Gegenstands (O₁) mit Hilfe der Bilderfassungseinheit der ersten elektronischen Vorrichtung;
- Übertragen des ersten Bilds an das Überprüfungssystem mit Hilfe der Datenübertragungseinheit der ersten elektronischen Vorrichtung;
wobei das Verfahren außerdem eine Authentifizierungs- oder Identifizierungsphase bezüglich der Person (1) mit Hilfe einer zweiten elektronischen Vorrichtung (2) umfasst, wobei die Authentifizierungs- oder Identifizierungsphase die folgenden Schritte enthält, die im Bereich des Überprüfungssystems (3) durchgeführt werden:
- Empfang eines zweiten Bilds (I'₁) mindestens eines Gegenstands (O₁) gleich oder ähnlich demjenigen des ersten Bilds (I₁) von der zweiten elektronischen Vorrichtung;
- Vergleich des zweiten Bilds mindestens mit dem ersten Bild;
- Folgern, dass die Person erfolgreich authentifiziert oder identifiziert ist, wenn der Vergleich des zweiten Bilds mit dem ersten Bild eine Übereinstimmung ihrer jeweiligen Gegenstände offenbart;
wobei das zweite Bild ein nicht vorher registriertes Bild ist und für die Zwecke des Vergleichs zum Zeitpunkt der Authentifizierung oder der Identifizierung der Person erworben wird.

2. Verfahren nach dem vorhergehenden Anspruch, wobei der von der Person (1) gewählte Gegenstand (O₁) ein Gegenstand ist, den die Person immer bei sich trägt oder der in ihrer Reichweite ist.

3. Verfahren nach Anspruch 1 oder 2, wobei das erste Bild (I₁) gesichert an das Überprüfungssystem (3) übertragen wird.

4. Verfahren nach einem der vorhergehenden Ansprüche, wobei mindestens ein erster persönlicher Datenwert (m₁) der Person (1) zusätzlich zum ersten Bild (I₁) an das Überprüfungssystem (3) übertragen wird.

5. Verfahren nach Anspruch 4, das außerdem den Empfang ausgehend von der zweiten elektronischen Vorrichtung (2) eines zweiten persönlichen Datenwerts der Person (1) entsprechend dem ersten persönlichen Datenwert (m₁) und den Vergleich des zweiten persönlichen Datenwerts mindestens mit dem ersten persönlichen Datenwert enthält, und wobei gefolgert wird, dass die Person erfolgreich authentifiziert oder identifiziert ist, wenn der Vergleich des zweiten Bilds (I'₁) mit dem ersten Bild (I₁) eine Übereinstimmung zwischen ihren jeweiligen Gegenständen offenbart, und wenn der Vergleich des zweiten persönlichen Datenwerts mit dem ersten persönlichen Datenwert eine Übereinstimmung zwischen dem zweiten persönlichen Datenwert und dem ersten persönlichen Datenwert offenbart.

6. Verfahren nach einem der vorhergehenden Ansprüche, wobei die erste elektronische Vorrichtung (2) und die zweite elektronische Vorrichtung (2) eine gleiche Vorrichtung sind.

7. Verfahren nach einem der vorhergehenden Ansprüche, wobei die erste elektronische Vorrichtung (2) und/oder die zweite elektronische Vorrichtung (2) der Person (1) gehören.

8. Verfahren nach einem der vorhergehenden Ansprüche, wobei das zweite Bild (I'₁) von der zweiten elektronischen Vorrichtung (2) gesichert an das Überprüfungssystem (3) übertragen wird.

9. Überprüfungssystem (3) zum Ermöglichen der Authentifizierung oder Identifizierung einer Person (1) nach einem der vorhergehenden Ansprüche, wobei das Überprüfungssystem enthält:
- eine erste Empfangseinheit, um von einer ersten elektronischen Vorrichtung (2) ein erstes erfasstes Bild (I₁) mindestens eines von der Person geheim gewählten beliebigen Gegenstands (O₁) zu empfangen;
- eine zweite Empfangseinheit, um von einer zweiten elektronischen Vorrichtung (2) ein zweites Bild (I'₁) mindestens eines Gegenstands (O₁) gleich oder ähnlich demjenigen des ersten Bild zu empfangen;
- einen Bildkomparator, um das zweite Bild mindestens mit dem ersten Bild zu vergleichen;
- eine Entscheidungseinheit, um zu folgern, dass die Person erfolgreich authentifiziert oder identifiziert ist, wenn der vom Komparator ausgeführte Vergleich des zweiten Bilds mit dem ersten Bild eine Übereinstimmung zwischen ihren jeweiligen Gegenständen offenbart; wobei das zweite Bild ein nicht vorher registriertes Bild ist und für die Zwecke des Vergleichs zum Zeitpunkt der Authentifizierung oder der Identifizierung der Person erworben wird.

10. Überprüfungssystem nach Anspruch 9, wobei das Überprüfungssystem auf mehrere Entitäten verteilt ist.

11. Computerprogrammprodukt, das Codeanweisungen enthält, um das Verfahren nach einem der Ansprüche 1 bis 8 durchzuführen, wenn es in EDV-Einrichtungen geladen und von ihnen ausgeführt wird.

## Claims

1. Method enabling the authentication or identification of a person (1), using a first electronic device (2) comprising an image-capturing unit and a data transmission unit, said method including a phase of registering said person with a verification system (3), said registration phase comprising the following steps:
- capturing, using an image-capturing unit of said first electronic device, a first image (I₁) of at least one object (O₁) of any kind that is secretly selected by the person;
- transmitting said first image to the verification system by means of the data transmission unit of said first electronic device;
the method further including an authentication or identification phase relative to said person (1), using a second electronic device (2), the authentication or identification phase comprising the following steps carried out in the verification system (3):
- receiving from the second electronic device a second image (I'₁) of at least one object (O₁) that is identical or similar to the object in the first image (I₁);
- comparing the second image at least to the first image;
- concluding that the person is authenticated or identified successfully when the comparison of the second image to the first image reveals a match between their respective objects;
wherein the second image is an image not previously saved and captured for use in the comparison at the time of the authentication or identification.

2. Method according to any of the above claims, wherein the object (O₁) chosen by the person (1) is an object that the person always has on him or within reach.

3. Method according to claim 1 or 2, wherein the first image (I₁) is sent to the verification system (3) in a secure manner.

4. Method according to any of the above claims, wherein at least a first personal data item (m₁) for said person (1) is sent to the verification system (3) as a supplement to the first image (I₁).

5. Method according to claim 4, further comprising the receiving, from the second electronic device (2), of a second personal data item for said person (1) corresponding to the first personal data item (m₁), and the comparison of the second personal data item to at least the first personal data item, and wherein it is concluded that the person is authenticated or identified successfully when the comparison of the second image (I'₁) to the first image (I₁) reveals a match between their respective objects and the comparison of the second personal data item to the first personal data item reveals a match between the second personal data item and the first personal data item.

6. Method according to any of the above claims, wherein the first electronic device (2) and the second electronic device (2) are the same device.

7. Method according to any of the above claims, wherein the first electronic device (2) and/or the second electronic device (2) belong to said person (1).

8. Method according to any of the above claims, wherein the second image (I'₁) is sent in a secure manner from the second electronic device (2) to the verification system (3).

9. Verification system (3) enabling the authentication or identification of a person (1) according to any of the above claims, said verification system comprising:
- a first receiving unit for receiving, from a first electronic device (2), a first captured image (I₁) of at least one object (O₁) of any kind that is secretly selected by the person;
- a second receiving unit for receiving, from a second electronic device (2), a second image (I'₁) of at least one object (O₁) that is identical or similar to the object of the first image;
- an image comparison unit that compares the second image to at least the first image;
- a decision unit which decides that the person is authenticated or identified successfully when the comparison of the second image to the first image performed by the image comparison unit reveals a match between their respective objects;
wherein the second image is an image not previously saved and captured for use in the comparison at the time of the authentication or identification.

10. Verification system according to claim 9, said verification system being distributed across multiple entities.

11. Computer program product comprising code instructions for implementing the method according to any of claims 1 to 8 when it is loaded onto and executed by computer means.
